# EUROPÄISCHE PATENTSCHRIFT

(11) **EP 1 228 127 B1**
(45) Veröffentlichungstag und Bekanntmachung des Hinweises auf die Patenterteilung: **07.09.2005**
(21) Anmeldenummer: 00969470.4
(22) Anmeldetag: 10.10.2000
(51) Int. Cl.: C08J 9/18

(54) **PARTIKELFÖRMIGE, EXPANDIERBARE OLEFINPOLYMERISATE**
PARTICLE-SHAPED, EXPANDABLE OLEFIN POLYMERS
POLYMERISATS OLEFINIQUES EXPANSIBLES, SOUS FORME DE PARTICULES

(30) Priorität: 20.10.1999 DE 19950420
(43) Veröffentlichungstag der Anmeldung: 07.08.2002
(73) Patentinhaber: BASF Aktiengesellschaft, 67056 Ludwigshafen (DE)
(72) Erfinder: MALETZKO, Christian, 67122 Altrip (DE); HAHN, Klaus, 67281 Kirchheim (DE); DE GRAVE, Isidor, 67157 Wachenheim (DE); EHRMANN, Gerd, 67146 Deidesheim (DE); DIETZEN, Franz-Josef, 67071 Ludwigshafen (DE)
(86) Internationale Anmeldenummer: PCT/EP2000/009925
(87) Internationale Veröffentlichungsnummer: WO 2001/029119

(56) Entgegenhaltungen:
- EP-A- 0 934 974
- US-A- 4 666 946

## Beschreibung

Die Erfindung betrifft treibmittelhaltige, partikelförmige, expandierbare Olefinpolymerisate, die zu Schaumpartikeln expandiert werden können. Polyolefin-Schaumpartikel werden in steigendem Maße zur Herstellung von Schaumstoff-Formteilen im Automobilbau, im Verpackungswesen und im Freizeitbereich eingesetzt. Gegenüber ungeschäumten expandierbaren Partikeln, z.B. solchen auf Polystyrolbasis (EPS-Partikel), sind Schaumpartikel aber sehr voluminös, was beim Transport und bei der Lagerung infolge des großen Raumbedarfs von Nachteil ist.

EPS-Partikel können bekanntlich hergestellt werden durch Imprägnieren von Polystyrol-Granulat mit einem flüchtigen Kohlenwasserstoff-Treibmittel in wässriger Suspension, Abkühlen der Suspension und Isolieren der imprägnierten Partikel. Aufgrund des guten Rückhaltevermögens des Polystyrols für Kohlenwasserstoffe diffundieren diese nur sehr langsam aus, so daß die treibmittelhaltigen Partikel längere Zeit ohne Treibmittelverlust gelagert werden können.

Dies ist jedoch bei Polyolefinen nicht ohne weiteres möglich, so daß ungeschäumte expandierbare Polyolefinpartikel bisher nicht verfügbar sind. Die bekannten expandierten Polypropylen-Schaumpartikel (EPP) werden in technischem Maßstab hergestellt durch Imprägnieren von Polypropylen-Granulat mit einem flüchtigen Treibmittel in wässriger Suspension unter Druck und Entspannen, wobei die imprägnierten Partikel aufschäumen. Als Treibmittel werden in der Praxis Butan, Dichlordifluormethan und CO₂ eingesetzt. Da diese Treibmittel verhältnismäßig rasch aus dem Polypropylen wieder ausdiffundieren, wurden so hergestellte treibmittelhaltige Polypropylenpartikel als nicht lagerfähig angesehen.

Die US 4,666,946 beschreibt Blends aus Polypropylen-Polystyrol-Interpolymeren, die nach peroxidischem Abbau und Imprägnierung mit einem Treibmittel zu Produkten führen, die aufgrund des Polystyrolanteils das Treibmittel besser zu halten vermögen und bei niedrigen Temperaturen um 100°C verschäumbar sind.

In der EP-A 540 271 ist ein Verfahren zur Herstellung von partikelförmigen expandierbaren Polyblends aus Polyphenylenether und einem Polyolefin beschrieben. Dabei wird Minigranulat aus einem Polyphenylenether/Polyolefin-Blend in wässriger Dispersion in einem Druckbehälter mit einem Halogenkohlenwasserstoff-Treibmittel, vorzugsweise Trichlorfluormethan, imprägniert, die Dispersion wird abgekühlt und die expandierbaren Partikel werden abgetrennt. Das Verfahren hat den Nachteil, daß es offenbar nur mit Halogenkohlenwasserstoffen als Treibmittel durchführbar ist, die aber aus Umweltschutzgründen bedenklich sind. Außerdem zeigt sich beim Nacharbeiten der Beispiele, daß beim Verschäumen der expandierbaren Partikel recht grobzellige Schaumstoffe erhalten werden.

Der Erfindung lag daher die Aufgabe zugrunde, ungeschäumte expandierbare Partikel aus Olefinpolymerisaten bereitzustellen, die ein vorzugsweise halogenfreies Treibmittel enthalten und zu feinzelligen Schaumstoffen verschäumbar sind. Die Olefinpolymerisate dürfen keine Thermoplasten mit einer Glastemperatur oberhalb von 180°C zugemischt enthalten (Polyphenylenether haben eine Glastemperatur von etwa 200°C); vorzugsweise sollten weniger als 5 Gew.-% artfremder Thermoplasten zugemischt sein, insbesondere überhaupt keine.

Gegenstand der Erfindung sind partikelförmige, expandierbare Olefinpolymerisate, wobei das Olefinpolymerisat entweder ein Homopolymerisat des Propylens oder ein Copolymerisat des Propylens mit bis zu 15 Gew.-% Comonomeren, ausgewählt aus Ethylen, Buten-1 oder deren Mischungen ist, die mit bis zu 50 Gew.-%, vorzugsweise weniger als 5 Gew.-% eines Thermoplasten mit einer Glastemperatur unterhalb von 180°C abgemischt sein können, jedoch keine Thermoplasten mit einer Glastemperatur oberhalb von 180°C zugemischt enthalten, und 1 bis 40 Gew.-% eines halogenfreien, organischen Treibmittels mit einem Siedepunkt zwischen -5 und 150°C, jeweils bezogen auf ihr Gewicht, enthalten und dadurch gekennzeichnet sind, daß sie eine Schüttdichte von mehr als 400 g/l aufweisen und nach einstündiger Lagerung bei Raumtemperatur an freier Atmosphäre durch Erhitzen auf Temperaturen oberhalb von 100°C auf eine Schüttdichte von weniger als 200 g/l aufschäumbar sind. Dabei sollten die treibmittelhaltigen Partikel mindestens teilweise aufschmelzen, so daß der Schäumprozeß vollständig ablaufen kann. Im Fall der bevorzugten Propylenpolymerisate liegt die optimale Schäumtemperatur im Bereich von 130 bis 160°C, vorzugsweise bei 150°C.

Ein weiterer Gegenstand der Erfindung ist ein Verfahren zur Herstellung dieser expandierbaren Partikel, bei dem man Polyolefin-Granulat in Suspension in einem Druckbehälter bei erhöhter Temperatur mit 2 bis 50 Gew.-% eines vorzugsweise halogenfreien. organischen Treibmittels imprägniert, den Ansatz auf Temperaturen unter 100°C abkühlt, das imprägnierte Granulat abtrennt und wäscht.

In der EP-A 778 310 ist ein Verfahren zur Herstellung von Polyolefin-Schaumstoffpartikeln beschrieben, bei dem in einer erstem Stufe angeschäumte Partikel mit einer Schüttdichte von 120 bis 400 g/l durch Extrusion von feste Treibmittel enthaltendem Polyolefin hergestellt werden, die dann in einer zweiten Stufe mit Wasserdampf weiter aufgeschäumt werden.

Die erfindungsgemäßen partikelförmigen, expandierbaren Olefinpolymerisate sind dadurch gekennzeichnet, daß sie als praktisch ungeschäumte Partikel mit einer Schüttdichte von mehr als 400 g/l, vorzugsweise von mehr als 500 g/l vorliegen, und daß sie nach einstündiger Lagerung bei Raumtemperatur an freier Atmosphäre durch Erhitzen auf Temperaturen oberhalb von 100°C, bei Propylenpolymerisaten vorzugsweise auf 130 bis 160°C, insbesondere auf 150°C, auf eine Schüttdichte von weniger als 200 g/l, vorzugsweise von weniger als 150 g/l und insbesondere von weniger als 100 g/l aufschäumbar sind.

Die erste Bedingung sagt aus, daß die Partikel beim Entspannen des Imprägnieransatzes praktisch nicht schäumen; das als Ausgangsmaterial eingesetzte Olefinpolymerisat-Granulat hat je nach Zusammensetzung und Partikelform ein Schüttgewicht von 450 bis 700 g/l. Die zweite Bedingung sagt aus, daß die Partikel auch bei einstündiger Lagerung an freier Atmosphäre noch ausreichend viel Treibmittel gespeichert enthalten und deshalb noch gut aufschäumbar sind. Eine einstündige Lagerung bei Raumtemperatur an freier Atmosphäre ist deshalb für die Praxis wichtig und auch realistisch, weil in der Praxis die Aufarbeitung und das Handling der treibmittelhaltigen Partikel bis zum Verpacken und nach der Entnahme aus der Verpackung bis zum Verschäumen zusammengerechnet nicht mehr als eine Stunde dauert. Während dieser Zeit sollte möglichst wenig Treibmittel entweichen. Da die Partikel bei der Lagerung und beim Transport im allgemeinen in geschlossenen Behältern oder in gasdichten Foliensäcken verpackt sind, kann auch dabei nur unwesentlich Treibmittel entweichen.

Normalerweise sind die erfindungsgemäßen treibmittelhaltigen Polyolefin-Partikel mehrere Tage lagerbar, ohne daß größere Mengen Treibmittel entweichen. Eine längere offene Lagerung sollte allerdings vermieden werden.

Olefinpolymerisate im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder Buten-1, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung aus den unter a) und b) genannten Polyolefinen (gegebenenfalls nach Zugabe von Phasenvermittlern).

Geeignet sind sowohl mit Ziegler- als auch mit Metallocen-Katalysatoren hergestellte Olefinpolymerisate.

Der Kristallitschmelzpunkt (DSC-Maximum) der unter a) bis c) aufgelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bevorzugte Polyolefine sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Das Olefinpolymerisat kann mit bis zu 50 % seines Gewichts eines andersartigen Thermoplast mit einer Glastemperatur (DSC-Wendepunkt) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. EXXON), zugesetzt werden können.

Es hat sich gezeigt, daß die Erfindung auch ohne Zumischen eines artfremden Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

Das Polyolefin kann die üblichen Zusatzstoffe enthalten, wie Antioxidantien, Stabilisatoren, Flammschutzmittel, Wachse, Nucleierungsmittel, Füllstoffe, Pigmente und Farbstoffe.

Zur Herstellung der erfindungsgemäßen expandierbaren Polyolefinpartikel geht man aus von Polyolefingranulat, welches vorzugsweise mittlere Durchmesser von 0,2 bis 10, insbesondere von 0,5 bis 5 mm aufweist. Dieses meist zylinderförmige oder runde Minigranulat wird hergestellt durch Extrudieren des Polyolefins, gegebenenfalls zusammen mit dem zuzumischenden Thermoplasten und weiteren Zusatzstoffen, Auspressen aus dem Extruder, gegebenenfalls Abkühlen und Granulieren.

Das Minigranulat sollte vorzugsweise 0,001 bis 10, vorzugsweise 0,1 bis 5 und insbesondere 0,5 bis 3 Gew.-% eines Nucleierungsmittels enthalten. Geeignet sind z.B. Talkum, Paraffine und/oder Wachse sowie Ruß, Graphit und pyrogene Kieselsäuren, ferner natürliche oder synthetische Zeolithe und (ggf. modifizierte) Bentonite. Sie bewirken, daß ein feinzelliger Schaum entsteht, in manchen Fällen ermöglichen sie überhaupt erst das Schäumen.

Dieses Granulat wird in einem Rührreaktor in einem Suspensionsmedium dispergiert. Bevorzugtes Suspensionsmedium ist Wasser. In diesem Fall müssen Suspensionshilfsmittel zugesetzt werden, um eine gleichmäßige Verteilung des Minigranulats im Suspensionsmedium zu gewährleisten. Geeignete Suspensionshilfsmittel sind wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-% eingesetzt. Auf den Zusatz von Suspensionsstabilisatoren kann verzichtet werden, wenn das Suspensionsmedium nach WO-A 99/10419 eine niedrigere Dichte aufweist als das suspendierte Granulat. Dies ist z.B. der Fall, wenn das Suspensionsmedium Ethanol oder eine Mischung von Ethanol mit bis zu 50 Gew.-% Wasser ist.

Wesentlich für die Erfindung ist die richtige Wahl des Treibmittels. Sein Siedepunkt muß zwischen -5 und 150°C, insbesondere zwischen 25 und 125°C liegen. Das Treibmittel ist vorzugsweise ein Alkan, ein Alkanol, ein Keton, ein Ether oder ein Ester. Besonders bevorzugt sind Pentane, Hexane und Heptane, insbesondere s-Pentan, ferner 3,3-Dimethyl-2-butanon und 4-Methyl-2-pentanon. Auch Treibmittelmischungen können eingesetzt werden. Das Treibmittel ist halogenfrei.

Das Treibmittel wird in Mengen von vorzugsweise 5 bis 30 Gew.-%, bezogen auf das Granulat, eingesetzt. Die Treibmittelzugabe kann dabei vor, während oder nach dem Aufheizen des Reaktorinhalts erfolgen. Es kann auf einmal oder in Teilportionen zugeführt werden.

Beim Imprägnieren muß die Temperatur zwischen 120°C und 150°C liegen.

Je nach Menge und Art des Treibmittels sowie nach der Höhe der Temperatur stellt sich im Reaktor ein Druck ein, der im allgemeinen höher als 2 bar ist und 40 bar nicht übersteigt.

Die Imprägnierzeiten liegen im allgemeinen zwischen 0,5 und 10 Stunden. Vor dem Entspannen und der Entnahme aus dem Rührreaktor wird die Suspension auf Temperaturen unterhalb von 100°C, vorzugsweise auf 10 bis 50°C abgekühlt, indem man z.B. Kühlwasser durch den Reaktormantel leitet. Nach dem Entspannen und dem Ablassen aus dem Reaktor werden die treibmittelhaltigen Partikel vom Suspensionsmedium abgetrennt und gewaschen.

Die treibmittelhaltigen Partikel können nach üblichen Methoden mit Heißluft oder Wasserdampf in Druckvorschäumern verschäumt werden. Beim Verschäumen mit Dampf werden je nach Art des Treibmittels, der Polymermatrix und der gewünschten Schüttdichte Dampfdrucke zwischen 2 und 4,5 bar angewandt, die Schäumzeiten variieren zwischen 3 und 30 sec, die Temperatur beim Schäumen sollte oberhalb von 100°C liegen, bei Polypropylen insbesondere zwischen 130 und 160°C. Beim einmaligen Schäumen werden Schüttdichten zwischen 20 und 200 g/l erreicht. Aus technischen oder wirtschaftlichen Gründen kann es zweckmäßig sein, niedrige Schüttdichten auch durch mehrmaliges Schäumen einzustellen.

Aus den dabei erhaltenen Schaumpartikeln können nach bekannten Methoden Schaumstoff-Formteile hergestellt werden.

Die in den Beispielen genannten Teile und Prozente beziehen sich auf das Gewicht.

### Beispiele 1 bis 12

### A. Herstellung der Minigranulate (MG)

### 1. Einsatzstoffe:

- PP:: Polypropylen NOVOLEN 3200 MC der Targor GmbH
- PA:: Polyamid ULTRAMID B 3 der BASF Aktiengesellschaft
- PPE:: Polyphenylenoxid NORYL 8390 der General Electric Comp.
- EX:: Phasenvermittler EXXELOR P 1015 der Exxon Corp.
- KR:: Phasenvermittler KRATON G 1701 E der Shell Corp.
- Wachs:: Polyethylenwachs LUWAX AF 31 der BASF Aktiengesellschaft
- BE:: Bentonit EXM 948 der Fa. Südchemie AG

### 2. Mischungen:

| | | |
|---|---|---|
| MG 1 | 100 | Teile PP |
| | 0,5 | Teile Wachs |
| | 1 | Teil Talkum |
| | | |
| MG 2 | 95 | Teile PP |
| | 4,75 | Teile PA |
| | 0,25 | Teile EX |
| | 0,1 | Teile Wachs |
| | 1 | Teil Talkum |
| | | |
| MG 3 | 70 | Teile PP |
| | 28,5 | Teile PA |
| | 1,5 | Teile EX |
| | 0,1 | Teile Wachs |
| | 1 | Teil Talkum |
| | | |
| MG 4 | 70 | Teile PP |
| | 30 | Teile PPE |
| | 5 | Teile KR |
| | 0,1 | Teile Wachs |
| | 1 | Teil Talkum |
| | | |
| MG 5 | 100 | Teile PP |
| | 1 | Teil Wachs |
| | 1 | Teil Talkum |
| | | |
| MG 6 | 100 | Teile PP |
| | 2 | Teile BE |
| | 1 | Teil Wachs |

### 3. Extrusion

Auf einem Extruder wurden die Einsatzstoffe in den angegebenen Mengen vermischt, ausgepreßt und granuliert. Das Minigranulat hat die Dimensionen d = 0,8 bis 1 mm, 1 = 2,3 bis 2,8 mm.

### Beispiele 1 bis 6

### B. Herstellung der expandierbaren Partikel im 260 ml-Rührautoklaven

### 1. Einsatzstoffe und Mengen

| | |
|---|---|
| Minigranulat | 33,3 g |
| Wasser | 106,7 g |
| Treibmittel | 10,7 g |
| Tricalciumphosphat | 2,9 g |
| Natriumdodecylarylsulfonat | 0,1 g |

### 2. Imprägnierung

In einen 260-ml-Rührautoklaven wurden die Einsatzstoffe eingegeben. Der Ansatz wurde auf 140°C aufgeheizt und drei Stunden bei dieser Temperatur gehalten. Dann wurde der Autoklav auf Raumtemperatur abgekühlt und entspannt. Die imprägnierten Partikel wurden abgetrennt, gewaschen, trockengeblasen und in einem geschlossenen Behälter gelagert.

### C. Verschäumen der expandierbaren Partikel

Die Partikel wurden aus dem Behälter entnommen und eine Stunde lang bei Raumtemperatur an freier Atmosphäre gelagert. Danach wurden sie in einem üblichen Druckvorschäumer mit Wasserdampf (Dampfdruck 3,5 bar) 8 sec. lang bei 150°C geschäumt. In der Tabelle 1 sind die eingesetzten Minigranulate und Treibmittel angegeben; ferner die vor und nach der Wartezeit von einer Stunde gefundene Treibmittelgehalte und Schüttdichten der Partikel, sowie die Zelligkeit der entstandenen Schaumpartikel.

**Tabelle 1**

| Beispiel | 1 | 2 | 3 | 4 | 5 | 6 V |
|---|---|---|---|---|---|---|
| Mini-granulat | MG1 | MG2 | MG3 | MG1 | MG1 | MG4 |
| Treibmittel | s-Pentan | DB | MP | MP | n-Butan | Freon 11 |
| Gehalt vorher % | 15,5 | 19,2 | 22,8 | 17,9 | 7,2 | 17,6 |
| Gehalt nachher % | 5,9 | 9,3 | 9,9 | 9,4 | 3,5 | 12,4 |
| Schüttdichte vorher g/l | 480 | 546 | 522 | 539 | 531 | 573 |
| Schüttdichte nachher g/l | 88 | 51 | 86 | 70 | 147 | 278 |
| Zelligkeit | fein | mittel | mittel | fein | fein | grob |
| Treibmittel DB # = 3,3-Dimethyl-2-butanon MP = 4-Methyl-2-pentanon Freon 11 = Trichlorfluormethan | | | | | | |

Das Beispiel 6 V ist ein Vergleichsbeispiel.

### Beispiele 7 bis 11

### B. Herstellung der expandierbaren Partikel im 55 1-Rührbehälter

### 1a. Einsatzstoffe und Mengen (Beispiele 7 bis 9)

| | |
|---|---|
| Minigranulat | 11,93 kg |
| Wasser | 26,50 kg |
| Treibmittel | 2,50 kg |
| Calciumcarbonat | 1,05 kg (Calcilit 1G; Fa. Alpha) |
| Lutensol AO 3109 | 1,07 g (Tensid der Fa. BASF AG) |

### 1b. Einsatzstoffe und Mengen (Beispiel 10)

| | |
|---|---|
| Minigranulat | 16,19 kg |
| Wasser | 20,24 kg |
| Treibmittel | 3,40 kg |
| Calciumcarbonat | 1,42 kg (Calcilit 1G; Fa. Alpha) |
| Lutensol AO 3109 | 1,46 g (Tensid der Fa. BASF AG) |

### 1c. Einsatzstoffe und Mengen (Beispiel 11)

| | |
|---|---|
| Minigranulat | 16,24 kg |
| Wasser | 20,30 kg |
| Treibmittel | 3,41 kg |
| Calciumcarbonat | 1,06 kg (Calcilit 1G; Fa. Alpha) |
| Lutensol AO 3109 | 1,46 g (Tensid der Fa. BASF AG) |

### 2. Imprägnierung

In einem 55-Liter-Rührbehälter wurden die Einsatzstoffe eingegeben. Der Ansatz wurde innerhalb der in der Tabelle genannten Aufheizzeit auf 140°C gebracht und dort eine Stunde gehalten. Dann wurde auf Raumtemperatur abgekühlt und entspannt. Die imprägnierten Granulate wurden in ein Sieb abgelassen, dort mit Wasser gewaschen und dann in geschlossenen Fässern gelagert. Proben dieser Materialien wurden trockengeblasen und für die Schäumversuche verwendet (s. Tabelle 2).

### Beispiel 12

### B. Herstellung der expandierbaren Partikel im 1,6 m³-Rührbehälter

### 1. Einsatzstoffe und Mengen (Beispiel 12)

| | |
|---|---|
| Minigranulat | 423,3 kg |
| Wasser | 940,7 kg |
| Treibmittel | 88,9 kg |
| Calciumcarbonat | 37,1 kg (Calcilit 1G; Fa. Alpha) |
| Lutensol AO 3109 | 38,1 g (Fa. BASF AG) |

### 2. Imprägnierung

In einem 1,6 m³-Rührbehälter wurden die Einsatzstoffe eingegeben. Der Ansatz wurde innerhalb von 5 Stunden auf 140°C gebracht und dort eine Stunde gehalten. Dann wurde auf Raumtemperatur abgekühlt und entspannt. Die imprägnierten Granulate wurden in ein Sieb abgelassen, dort mit Wasser gewaschen und dann in geschlossenen Fässern gelagert. Proben dieser Materialien wurden trockengeblasen und für die Schäumversuche verwendet (s. Tabelle 2).

### Beispiele 7 bis 12

### C. Verschäumen der expandierbaren Partikel

Das Verschäumen wurde wie in den Beispielen 1 bis 6 unter C beschrieben, durchgeführt. Ergebnisse siehe Tabelle 2.

**Tabelle 2**

| Beispiel | 7 | 8 | 9 | 10 | 11 | 12 |
|---|---|---|---|---|---|---|
| Mini-granulat | MG1 | MG5 | MG6 | MG1 | MG1 | MG1 |
| Aufheizzeit [h] | 1 | 1 | 1 | 5 | 5 | 5 |
| Treibmittel | s-Pentan | n-Heptan | s-Pentan | s-Pentan | s-Pentan | s-Pentan |
| Gehalt vorher % | 8.7 | 12,0 | 10,8 | 12,5 | 12,1 | 13,6 |
| Gehalt nachher % | 4,6 | 4,9 | 7,3 | 5,7 | 5,7 | 5,9 |
| Schüttdichte vorher [g/l] | 564 | 562 | 562 | 563 | 558 | 562 |
| Schüttdichte nachher [g/l] | 73 | 154 * | 46 | 67 | 61 | 78 |
| Zelligkeit | fein | fein | fein | fein | fein | fein |

| | | | | | | |
|---|---|---|---|---|---|---|
| * abweichender Dampfdruck: 4 bar, 8 sec | | | | | | |

## Patentansprüche

1. Partikelförmige, expandierbare Olefinpolymerisate, wobei das Olefinpolymerisat entweder ein Homopolymerisat des Propylens oder ein Copolymerisat des Propylens mit bis zu 15 Gew.-% Comonomeren, ausgewählt aus Ethylen, Buten-1 oder deren Mischungen ist, die mit bis zu 50 Gew.-% eines Thermoplasten mit einer Glastemperatur unterhalb von 180°C abgemischt sein können, jedoch keine Thermoplasten mit einer Glastemperatur oberhalb von 180°C, zugemischt enthalten, und 1 bis 40 Gew.-% eines halogenfreien organischen Treibmittels mit einem Siedepunkt zwischen -5 und 150°C, jeweils bezogen auf ihr Gewicht, enthalten, **dadurch gekennzeichnet, daß** die ungeschäumten Partikel eine Schüttdichte von mehr als 400 g/l aufweisen und selbst nach einstündiger Lagerung bei Raumtemperatur an freier Atmosphäre durch Erhitzen auf Temperaturen oberhalb von 100°C auf eine Schüttdichte von weniger als 200 g/l aufschäumbar sind.

2. Expandierbare Olefinpolymerisate nach Anspruch 1, **dadurch gekennzeichnet, daß** sie 0,001 bis 10 Gew.-%, bezogen auf ihr Gewicht, eines Nucleierungsmittels enthalten.

3. Expandierbare Olefinpolymerisate nach Anspruch 1, **dadurch gekennzeichnet, daß** sie keinen Thermoplasten zugemischt enthalten.

4. Expandierbare Olefinpolymerisate nach Anspruch 1, **dadurch gekennzeichnet, daß** sie mit 5 bis 40 Gew.-% eines Polyamids abgemischt sind.

5. Verfahren zur Herstellung von partikelförmigen, expandierbaren Olefinpolymerisaten, wobei das Olefinpolymerisat entweder ein Homopolymerisat des Propylens ist oder ein Copolymerisat des Propylens mit bis zu 15 Gew.-% Comonomeren, ausgewählt aus Ethylen, Buten-1 oder deren Mischungen ist, die mit bis zu 50 Gew.-% eines Thermoplasten mit einer Glastemperatur unterhalb von 180°C abgemischt sein können, jedoch mit keinem Thermoplasten mit einer Glastemperatur oberhalb von 180°C, durch Imprägnieren von Polyolefin-Granulat mit 2 bis 50 Gew.-% eines halogenfreien organischen Treibmittels mit einem Siedepunkt zwischen -5 und 150°C in Suspension in einem Druckbehälter bei Temperaturen zwischen 120°C und 150°C, Entspannen des Ansatzes, Abtrennen und Waschen des imprägnierten Granulats, **dadurch gekennzeichnet, daß** man den Ansatz vor dem Entspannen auf Temperaturen unter 100°C abkühlt.

6. Verfahren nach Anspruch 5, **dadurch gekennzeichnet, daß** das Treibmittel ein Alkan, ein Alkanol, ein Keton, ein Ether, ein Ester oder eine Mischung davon ist.

7. Verfahren nach Anspruch 6, **dadurch gekennzeichnet, daß** das Treibmittel ein Pentan, ein Hexan, ein Heptan, 3,3-Dimethyl-2-butanon oder 4-Methyl-2-pentanon ist.

8. Verfahren nach Anspruch 5, **dadurch gekennzeichnet, daß** das Polyolefingranulat 0,001 bis 10 Gew.-% eines Nucleierungsmittels enthält.

9. Verfahren nach Anspruch 9, **dadurch gekennzeichnet, daß** das Nucleierungsmittel ein Wachs und/oder Talkum ist.

10. Verwendung der partikelförmigen expandierbaren Olefinpolymerisate nach Anspruch 1 zur Herstellung von Schaumstoffen.

## Claims

1. An expandable olefin bead polymer, the olefin polymer being either a homopolymer of propylene or a copolymer of propylene with up to 15% by weight of comonomers selected from the group consisting of ethylene, 1-butene and mixtures thereof, which may have been blended with up to 50% by weight of a thermoplastic with a glass transition temperature below 180°C, there being, however, no admixed thermoplastics present with a glass transition temperature above 180°C, and there being from 1 to 40% by weight of a halogen-free organic blowing agent present with a boiling point of from -5 to 150°C, based in each case on the weight of the materials, wherein the unfoamed beads have a bulk density above 400 g/l and can be foamed to a bulk density below 200 g/l even after storage for one hour at room temperature in free contact with the atmosphere by heating above 100°C.

2. An expandable olefin polymer as claimed in claim 1, which comprises from 0.001 to 10% by weight of a nucleating agent, based on the weight of the polymer.

3. An expandable olefin polymer as claimed in claim 1, which comprises no admixed thermoplastics.

4. An expandable olefin polymer as claimed in claim 1 which has been blended with from 5 to 40% by weight of a polyamide.

5. A process for preparing expandable olefin bead polymers, the olefin polymer being either a homopolymer of propylene or a copolymer of propylene with up to 15% by weight of comonomers selected from the group consisting of ethylene, 1-butene and mixtures thereof, which may have been blended with up to 50% by weight of a thermoplastic with a glass transition temperature below 180°C but not with any thermoplastic with a glass transition temperature above 180°C, by impregnating polyolefin pellets with from 2 to 50% by weight of a halogen-free organic blowing agent with a boiling point of from -5 to 150°C in suspension in a pressure vessel at temperatures of from 120°C to 150°C, reducing the pressure on the batch and isolating and washing the impregnated pellets, wherein the batch is cooled below 100°C before the pressure is reduced.

6. A process as claimed in claim 5, wherein the blowing agent is an alkane, an alkanol, a ketone, an ether, an ester or a mixture of these.

7. A process as claimed in claim 6, wherein the blowing agent is a pentane, a hexane, a heptane, 3,3-dimethyl-2-butanone or 4-methyl-2-pentanone.

8. A process as claimed in claim 5, wherein the polyolefin pellets comprise from 0.001 to 10% by weight of a nucleating agent.

9. A process as claimed in claim 9, wherein the nucleating agent is a wax and/or talc.

10. The use of expandable olefin bead polymers as claimed in claim 1 for producing foams.

## Revendications

1. Polymères oléfiniques expansibles, en forme de particules, où le polymère oléfinique est un homopolymère du propylène ou un copolymère du propylène avec jusqu'à 15% en poids de comonomères choisis parmi de l'éthylène, du butène-1 ou leurs mélanges, ces polymères oléfiniques pouvant être mélangés avec jusqu'à 50% en poids d'une substance thermoplastique ayant une température de transition vitreuse inférieure à 180°C, mais ne contenant en mélange aucune substance thermoplastique ayant une température de transition vitreuse supérieure à 180°C, et contenant 1 à 40% en poids d'un agent moussant organique exempt d'halogène et présentant un point d'ébullition compris entre -5 et 150°C, chaque fois par rapport à leur poids, **caractérisés en ce que** les particules non expansées présentent une densité apparente supérieure à 400 g/litre et peuvent être expansées à une densité apparente inférieure à 200 g/litre, par chauffage à des températures supérieures à 100°C, même après un entreposage d'une heure à la température ambiante et à l'atmosphère libre.

2. Polymères oléfiniques expansibles suivant la revendication 1, **caractérisés en ce qu'**ils contiennent 0,001 à 10% en poids, par rapport à leur poids, d'un agent de nucléation.

3. Polymères oléfiniques expansibles suivant la revendication 1, **caractérisés en ce qu'**ils ne contiennent en mélange aucune substance thermoplastique.

4. Polymères oléfiniques expansibles suivant la revendication 1, **caractérisés en ce qu'**ils sont mélangés avec de 5 à 40% en poids d'un polyamide.

5. Procédé de préparation de polymères oléfiniques expansibles en forme de particules, où le polymère oléfinique est un homopolymère du propylène ou est un copolymère du propylène avec jusqu'à 15% en poids de comonomères choisis parmi de l'éthylène, du butène-1 ou leurs mélanges, ces polymères oléfiniques pouvant être mélangés avec jusqu'à 50% en poids d'une substance thermoplastique ayant une température de transition vitreuse inférieure à 180°C, mais sans substance thermoplastique ayant une température de transition vitreuse supérieure à 180°C, par imprégnation d'un produit de granulation de polyoléfine par 2 à 50% en poids d'un agent moussant organique exempt d'halogène et ayant un point d'ébullition compris entre -5 et 150°C en suspension dans un récipient sous pression, à des températures comprises entre 120°C et 150°C, détente de la charge, séparation et lavage du produit de granulation imprégné, **caractérisé en ce qu'**on refroidit la charge à des températures inférieures à 100°C avant la détente.

6. Procédé suivant la revendication 5, **caractérisé en ce que** l'agent moussant est un alcane, un alcanol, une cétone, un éther, un ester ou un mélange de ces substances.

7. Procédé suivant la revendication 6, **caractérisé en ce que** l'agent moussant est un pentane, un hexane, un heptane, de la 3,3-diméthyl-2-butanone ou de la 4-méthyl-2-pentanone.

8. Procédé suivant la revendication 5, **caractérisé en ce que** le produit de granulation de polyoléfine contient 0,001 à 10% en poids d'un agent de nucléation.

9. Procédé suivant la revendication 9, **caractérisé en ce que** l'agent de nucléation est une cire et/ou du talc.

10. Utilisation des polymères oléfiniques expansibles, en forme de particules, suivant la revendication 1, pour la fabrication de mousses.
